# EUROPEAN PATENT APPLICATION

(11) **EP 3 487 053 A1**
(43) Date of publication of application: **22.05.2019**
(21) Application number: 18205655.6
(22) Date of filing: 12.11.2018
(51) Int. Cl.: H02M 1/32, H02M 1/36, H02M 7/06, H02M 7/08

(54) **THREE-PHASE FOUR-WIRE POWER SUPPLY CIRCUIT, CONTROL METHOD, AND PROGRAM**

(30) Priority: 16.11.2017 JP 2017221175
(71) Applicant: MITSUBISHI HEAVY INDUSTRIES THERMAL SYSTEMS, LTD., 108-8215 Tokyo (JP)
(72) Inventor: OONO, Kenzo, Tokyo, 108-8215 (JP); SUMIYA, Atsuyuki, Tokyo, 108-8215 (JP)
(74) Representative: Cabinet Beau de Loménie

(57) **Abstract**

A three-phase four-wire power supply circuit (1) includes: a first converter circuit that includes a first rectification circuit (20) that is configured to rectify inter-wire electric power of a three-phase three-wire AC power supply (10), the three-phase three-wire AC power supply including three phases (Ln1, Ln2, Ln3) and a rush current suppressing circuit (R1, R2) that is disposed in one phase among the three phases, and the first converter circuit being configured to convert the inter-wire electric power into DC power; a second converter circuit that includes a second rectification circuit (30) that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit.

## Description

### BACKGROUND OF THE INVENTION

### Field of the Invention

The present invention relates to a three-phase four-wire power supply circuit, a control method, and a program.

### Description of Related Art

It is known that an overcurrent flows through a capacitor in which electric charge is not accumulated when a power supply circuit starts to operate. Generally, this overcurrent is called a rush current.

Japanese Patent No. 5611496 discloses a power supply circuit generating desired electric power using an inverter.

### SUMMARY OF THE INVENTION

In a three-phase four-wire power supply circuit that generates DC power from a three-phase three-wire AC power supply, it is desired to decrease rush electric power.

For this reason, in a three-phase four-wire power supply circuit that generates DC power from a three-phase three-wire AC power supply, a technology for decreasing rush electric power is required.

An object of the present invention is to provide a three-phase four-wire power supply circuit, a control method, and a program capable of solving the problem described above.

According to one aspect of the present invention, there is provided a three-phase four-wire power supply circuit including: a first converter circuit that includes a first rectification circuit that is configured to rectify inter-wire electric power of a three-phase three-wire AC power supply, the three-phase three-wire AC power supply including three phases and a rush current suppressing circuit that is disposed in one phase among the three phases, and the first converter circuit being configured to convert the inter-wire electric power into DC power; a second converter circuit that includes a second rectification circuit that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit.

According to a second aspect of the present invention, in the first aspect, the three-phase four-wire power supply circuit may include a resistor in the inter-wire inter-phase connection line.

According to a third aspect of the present invention, there is provided a control method using a three-phase four-wire power supply circuit including: a first converter circuit that includes a first rectification circuit that is configured to rectify inter-wire electric power of a three-phase three-wire AC power supply, the three-phase three-wire AC power supply including three phases and a rush current suppressing circuit that is disposed in one phase among the three phases, and the first converter circuit being configured to convert the inter-wire electric power into DC power; a second converter circuit that includes a second rectification circuit that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit. The control method includes: switching a first switch from an open state to a closed state configuring a current loop path to the inter-wire inter-phase connection line; and switching a second switch from the open state to the closed state forming a short circuit of a resistor disposed between the input side of the first rectification circuit and the input side of the second rectification circuit.

In a particular embodiment, the steps of the control method as defined in the present document are determined by computer program instructions. Consequently, according to a fourth aspect, the invention is also directed to a computer program for executing the steps of a control method as defined in the present document when this program is executed by a computer. This program can use any programming language and take the form of source code, object code or a code intermediate between source code and object code, such as a partially compiled form, or any other desirable form.

More particularly, the fourth aspect of the present invention may be directed to a program for a computer of a three-phase four-wire power supply circuit including: a first converter circuit that includes a first rectification circuit that is configured to rectify inter-wire electric power of a three-phase three-wire AC power supply, the three-phase three-wire AC power supply including three phases and a rush current suppressing circuit that is disposed in one phase among the three phases, and the first converter circuit being configured to convert the inter-wire electric power into DC power; a second converter circuit that includes a second rectification circuit that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit, the program causing the computer to execute: switching a first switch from an open state to a closed state, the first switch configuring a current loop path to the inter-wire inter-phase connection line; and switching a second switch from the open state to the closed state, the second switch forming a short circuit of a resistor disposed between the input side of the first rectification circuit and the input side of the second rectification circuit.

According to a three-phase four-wire power supply circuit according to an embodiment of the present invention, a rush current at the time of starting an operation can be decreased.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk. Alternatively, the information medium can be an integrated circuit in which the program is incorporated, the circuit being adapted to execute the method in question or to be used in its execution.

### BRIEF DESCRIPTION OF THE DRAWINGS

FIG. 1 is a diagram showing the configuration of a power supply circuit according to a first embodiment of the present invention;
FIG. 2 is a diagram showing a process flow of a power supply circuit according to the first embodiment of the present invention;
FIG. 3 is a diagram showing the configuration of a power supply circuit that is a comparison target;
FIG. 4 is a diagram showing the configuration of a power supply circuit according to a second embodiment of the present invention; and
FIG. 5 is a diagram showing the configuration of a power supply circuit according to a third embodiment of the present invention.

### DETAILED DESCRIPTION OF THE INVENTION

### <First embodiment>

Hereinafter, the configuration of a power supply circuit according to a first embodiment of the present invention will be described.

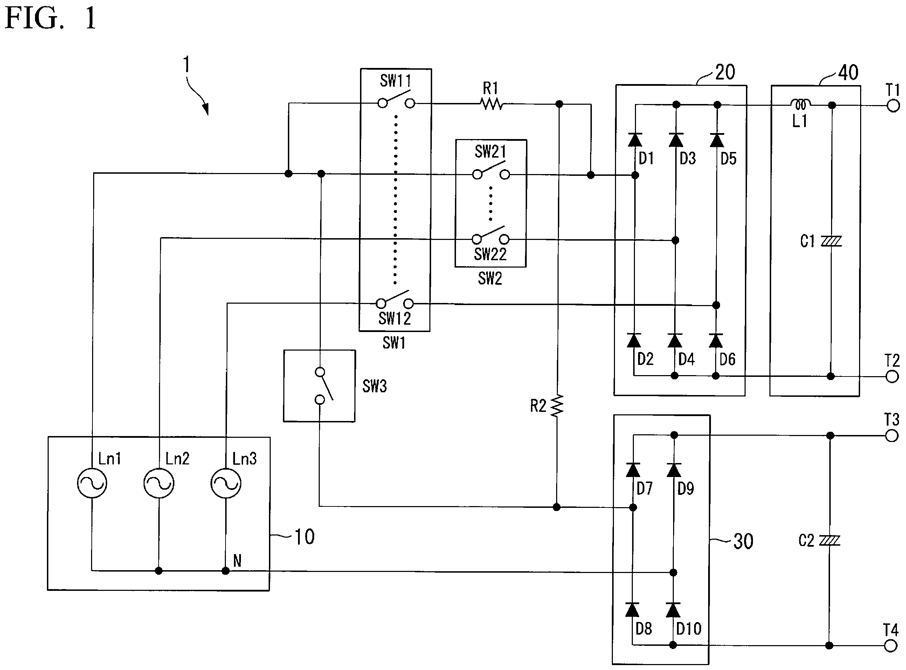

The power supply circuit 1 according to the first embodiment of the present invention is a three-phase four-wire power supply circuit and is a circuit that decreases a maximum current of an overcurrent flowing inside the power supply circuit 1 at the time of starting an operation and generates two DC voltages from a three-phase three-wire AC power supply during steady power supply. The power supply circuit 1, as shown in FIG. 1, includes a three-phase three-wire AC power supply 10, a first rectification circuit 20, a second rectification circuit 30, a smoothing circuit 40, a switch SW1 (SW11 and SW12) (one example of a first switch), a switch SW2 (SW21 and SW22) (one example of a second switch), a switch SW3 (one example of a third switch), resistors R1 and R2 (one example of a rush current suppressing circuit), and capacitors C1 and C2. When an operation of the power supply circuit 1 starts, a current flows through a path in which the capacitor C1 is charged, a path in which the capacitor C2 is charged, or a path in which the capacitors C1 and C2 are charged.

The three-phase three-wire AC power supply 10 outputs three AC voltages of which phases differ by 120 degrees with reference to a wiring N as a reference electric potential. The three-phase three-wire AC power supply 10 includes wirings N, Ln1, Ln2, and Ln3. In each embodiment of the present invention, among three phases in the three-phase three-wire AC power supply 10, a phase corresponding to the wiring Ln1 will be referred to as a phase Ln1, a phase corresponding to the wiring Ln2 will be referred to as a phase Ln2, and a phase corresponding to the wiring Ln3 will be referred to as a phase Ln3.

The first rectification circuit 20 receives three AC voltages having the phase Ln1, the phase Ln2, and the phase Ln3 and rectifies the received AC voltages. The first rectification circuit 20, for example, as shown in FIG. 1, includes diodes D1, D2, D3, D4, D5, and D6. Each of the diodes D1, D2, D3, D4, D5, and D6 includes a first terminal and a second terminal.

The second rectification circuit 30 receives an AC voltage having the phase Ln1 and rectifies the received AC voltage. The second rectification circuit 30, for example, as shown in FIG. 1, includes diodes D7, D8, D9, and D10. Each of the diodes D7, D8, D9, and D10 includes a first terminal and a second terminal.

The smoothing circuit 40 smooths a rectified voltage output by the first rectification circuit 20. The smoothing circuit 40 includes a capacitor C1 and a reactor (or inductor) L1. Each of the capacitor C1 and the reactor L1 includes a first terminal and a second terminal.

The capacitor C2 is a capacitor that is generally referred to as a "smoothing capacitor" and smooths a rectified voltage output by the second rectification circuit 30.

Each of the resistors R1 and R2 is a resistor that decreases a maximum current of an overcurrent that is generally referred to as a "rush current" flowing through the inside of the power supply circuit 1 when the power supply circuit 1 starts to operate. Each of the resistors R1 and R2 includes a first terminal and a second terminal.

The switch SW1 includes switches (switch units) SW11 and SW12. The switch SW2 includes switches SW21 and SW22. Each of the switches SW11, SW12, SW21, SW22, and SW3 is put in an off state (open state) or an on state (closed state) such that a maximum current of a rush current is decreased at the time of starting the operation of the power supply circuit 1, and no electric power loss occurs in the resistors R1 and R2 during steady power supply of the power supply circuit 1. Each of the switches SW11, SW12, SW21, SW22, and SW3 includes a first terminal and a second terminal.

The wiring N is connected to an anode terminal of the diode D9 and a cathode terminal of the diode D10.

The wiring Ln1 is connected to the first terminal of the switch SW11, the first terminal of the switch SW21, and the first terminal of the switch SW3. The wiring Ln2 is connected to the first terminal of the switch SW22. The wiring Ln3 is connected to the first terminal of the switch SW12.

The second terminal of the switch SW11 is connected to the first terminal of the resistor R1. The second terminal of the switch SW12 is connected to an anode terminal of the diode D5 and a cathode terminal of the diode D6.

The second terminal of the switch SW21 is connected to the second terminal of the resistor R1, the first terminal of the resistor R2, an anode terminal of the diode D1, and a cathode terminal of the diode D2. The second terminal of the switch SW22 is connected to an anode terminal of the diode D3, and a cathode terminal of the diode D4.

The second terminal of the switch SW3 is connected to the second terminal of the resistor R2, an anode terminal of the diode D7, and a cathode terminal of the diode D8.

The cathode terminal of the diode D1 is connected to the cathode terminal of the diode D3, the cathode terminal of the diode D5, and the first terminal of the reactor L1.

The anode terminal of the diode D2 is connected to the anode terminal of the diode D4, the anode terminal of the diode D6, and the first terminal of the capacitor C1.

The cathode terminal of the diode D7 is connected to the cathode terminal of the diode D9 and the first terminal of the capacitor C2.

The anode terminal of the diode D8 is connected to the anode terminal of the diode D10 and the second terminal of the capacitor C2.

The second terminal of the capacitor C1 is connected to the second terminal of the reactor L1.

In addition, the second terminal of the capacitor C1 is a terminal T1 of the power supply circuit 1. The first terminal of the capacitor C1 is a terminal T2 of the power supply circuit 1. The first terminal of the capacitor C2 is a terminal T3 of the power supply circuit 1. The second terminal of the capacitor C2 is a terminal T4 of the power supply circuit 1. During steady power supply, the power supply circuit 1 outputs a DC voltage having the terminal T2 as a reference electric potential from the terminal T1. In addition, during steady power supply, the power supply circuit 1 outputs a DC voltage having the terminal T4 as a reference electric potential from the terminal T3.

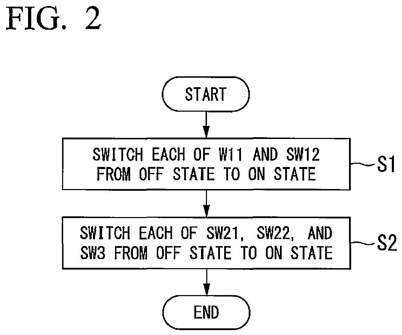

Next, a process of the power supply circuit 1 according to the first embodiment of the present invention will be described with reference to FIG. 2.

Before the start of an operation of the power supply circuit 1, each of the switches SW11, SW12, SW21, SW22, and SW3 is in the off state (open state). In addition, before the start of an operation of the power supply circuit 1, it is assumed that no electric charge is accumulated in the capacitors C1 and C2.

At the time of the start of an operation of the power supply circuit 1, each of the switches SW11 and SW12 switches from the off state to the on state (Step S1).

When each of the switches SW11 and SW12 is in the on state, an inter-wire circuit formed from the phase Ln1 and the phase Ln3 and an inter-phase circuit formed from the phase Ln1 and the phase N are formed.

A current flowing at the time of starting an operation of the power supply circuit 1 is different between a case in which the electric potential at the wiring Ln1 is higher than the electric potential at the wiring Ln3 and a case in which the electric potential at the wiring Ln3 is higher than the electric potential at the wiring Ln1.

Hereinafter, a current flowing through the power supply circuit 1 will be described in each of the case in which the electric potential at the wiring Ln1 is higher than the electric potential at the wiring Ln3 and the case in which the electric potential at the wiring Ln3 is higher than the electric potential at the wiring Ln1.

### (Case in which electric potential at wiring Ln1 is higher than electric potential at wiring Ln3)

When the power supply circuit 1 starts to operate, there are two charging paths including a first charging path and a second charging path. The first charging path is a path that passes through the three-phase three-wire AC power supply 10 through the wiring Ln1, the switch SW11, the resistor R1, the diode D1, the reactor L1, the capacitor C1, the diode D6, the switch SW12, and the wiring Ln3.

The second charging path is a path that passes through the three-phase three-wire AC power supply 10 through the wiring Ln1, the switch SW11, the resistor R1, the resistor R2, the diode D7, the capacitor C2, the diode D10, and the wiring N.

Here, each of the wiring N, the wiring Ln1, the switch SW11, the diode D1, the reactor L1, the capacitor C1, the diode D6, the switch SW12, the wiring Ln3, the three-phase three-wire AC power supply 10, the diode D7, the capacitor C2, and the diode D10 is assumed to be an ideal device. An ideal device is a device that has 0 ohms of the impedance and can flow an infinite current through it. A diode has a forward voltage VF as an offset voltage.

In the first charging path, the impedance of each of the wiring Ln1, the switch SW11, the diode D1, the reactor L1, the capacitor C1, the diode D6, the switch SW12, the wiring Ln3, and the three-phase three-wire AC power supply 10 is 0 ohms. For this reason, as the impedance of the first charging path, the impedance of the resistor R1 is dominant.

In the second charging path, the impedance of each of the wiring Ln1, the switch SW11, the diode D7, the capacitor C2, the diode D10, the wiring N, and the three-phase three-wire AC power supply 10 is 0 ohms. For this reason, as the impedance of the second charging path, the impedance of the resistor R1 + the resistor R2 is dominant.

The resistor R1 is common to the first charging path and the second charging path. For this reason, when each of the switches SW11 and the SW12 turns on, all the currents flowing through the wiring Ln1, the switch SW11, and the resistor R1 flow through the first charging path in which the impedance of the subsequent path is 0 ohms. The devices are not actually ideal devices, and finite impedance is present, and accordingly, a current corresponding to a ratio between the impedance of the first charging path and the impedance of the second charging path also flows through the second charging path. However, even in such a case, most of the current flowing through the wiring Ln1, the switch SW11, and the resistor R1 flows through the first charging path. As a result, when each of the switches SW11 and SW12 turns on, a current flows through the first charging path, and the capacitor C1 is charged.

When the capacitor C1 is fully charged, a current does not flow in the first charging path that is a path passing through the capacitor C1. For this reason, when the capacitor C1 is fully charged, all the currents flowing through the wiring N, the wiring Ln1, the switch SW11, and the resistor R1 flow through the second charging path. When a current flows through the second charging path, the capacitor C2 is charged. Then, when the capacitor C2 is fully charged, a current does not flow in the power supply circuit 1.

### (Case in which electric potential at wiring Ln3 is higher than electric potential at wiring Ln1)

When the power supply circuit 1 starts to operate, there are two paths including a third charging path and a fourth charging path.

The third charging path is a path that passes through the three-phase three-wire AC power supply 10 through the wiring Ln3, the switch SW12, the diode D5, the reactor L1, the capacitor C1, the diode D2, the resistor R1, the switch SW11, and the wiring Ln1.

The fourth charging path is a path that passes through the three-phase three-wire AC power supply 10 through the wiring Ln3, the switch SW12, the diode D5, the reactor L1, the capacitor C1, the diode D2, the resistor R2, the diode D7, the capacitor C2, the diode D10, and the wiring N.

Here, each of the wiring N, the wiring Ln3, the switch SW12, the diode D5, the reactor L1, the capacitor C1, the diode D2, the switch SW11, the wiring Ln1, the three-phase three-wire AC power supply 10, the diode D7, the capacitor C2, and the diode D10 is assumed to be an ideal device.

In the third charging path, the impedance of each of the wiring Ln3, the switch SW12, the diode D5, the reactor L1, the capacitor C1, the diode D2, the switch SW11, the wiring Ln1, and the three-phase three-wire AC power supply 10 is 0 ohms. For this reason, as the impedance of the third charging path, the impedance of the resistor R1 is dominant.

In the fourth charging path, the impedance of each of the wiring Ln3, the switch SW12, the diode D5, the reactor L1, the capacitor C1, the diode D2, the diode D7, the capacitor C2, the diode D10, the wiring N, and the three-phase three-wire AC power supply 10 is 0 ohms. For this reason, as the impedance of the fourth charging path, the impedance of the resistor R2 is dominant.

For this reason, when each of the switches SW11 and SW12 is in the on state, currents flowing through the third charging path and the fourth charging path are currents corresponding to a ratio between the resistance R1 that is the impedance of the third charging path and the resistance R2 that is the impedance of the fourth charging path.

The capacitors C1 and C2 are charged by the currents flowing through the third charging path and the fourth charging path corresponding to the ratio between the resistance R1 and the resistance R2.

In a case in which the capacitor C2 is fully charged earlier than the capacitor C1, the capacitor C1 is charged by the current flowing through the third charging path to be fully charged.

On the other hand, in a case in which the capacitor C1 is fully charged earlier than the capacitor C2, as shown below, the capacitor C2 is charged by a current flowing according to an electric potential relation between the electric potential at the wiring Ln1 and the electric potential at the wiring N and is fully charged. Specifically, in a case in which the electric potential at the wiring Ln1 is higher than the electric potential at the wiring N, a fifth charging path passing through the three-phase three-wire AC power supply 10 through the wiring Ln1, the switch SW11, the resistor R1, the resistor R2, the diode D7, the capacitor C2, the diode D10, and the wiring N is formed. Then, the capacitor C2 is charged by a current flowing through the fifth charging path. In addition, in a case in which the electric potential at the wiring N is higher than the electric potential at the wiring Ln1, a sixth charging path passing through the three-phase three-wire AC power supply 10 through the wiring N, the diode D9, the capacitor C2, the diode D8, the resistor R2, the resistor R1, the switch SW11, and the wiring Ln1 is formed. Then, the capacitor C2 is charged by a current flowing through the sixth charging path.

Then, when both of the capacitors C1 and C2 are fully charged, a current does not flow in the power supply circuit 1.

After the capacitors C1 and C2 are fully charged, each of the switches SW2 (SW21 and SW22) and SW3 is switched from the off state to the on state (Step S2). Each of the switches SW2 (SW21 and SW22) and SW3 may be switched from the off state to the on state at a timing that is determined in advance through a test or the like (for example, 10 seconds after the switch SW1 turns on). In addition, a threshold of at least one of an electric potential difference between both ends of the capacitor C1 and an electric potential difference between both ends of the capacitor C2 may be determined in advance through a test or the like, and each of the switches SW2 (SW21 and SW22) and SW3 may be switched from the off state to the on state in a case in which at least one of the electric potential difference between both ends of the capacitor C1 and the electric potential difference between both ends of the capacitor C2 is equal to or greater than the threshold. When each of the switches SW21, SW22, and SW3 is switched from the off state to the on state, the first terminal and the second terminal of the resistor R1 form a short circuit. In addition, when each of the switches SW21, SW22, and SW3 is switched from the off state to the on state, the first terminal and the second terminal of the resistor R2 form a short circuit.

As a result, the power supply circuit 1 can realize a circuit configuration during steady power supply in which the resistors R1 and R2 are not present in a path for transferring a voltage for generating a DC voltage.

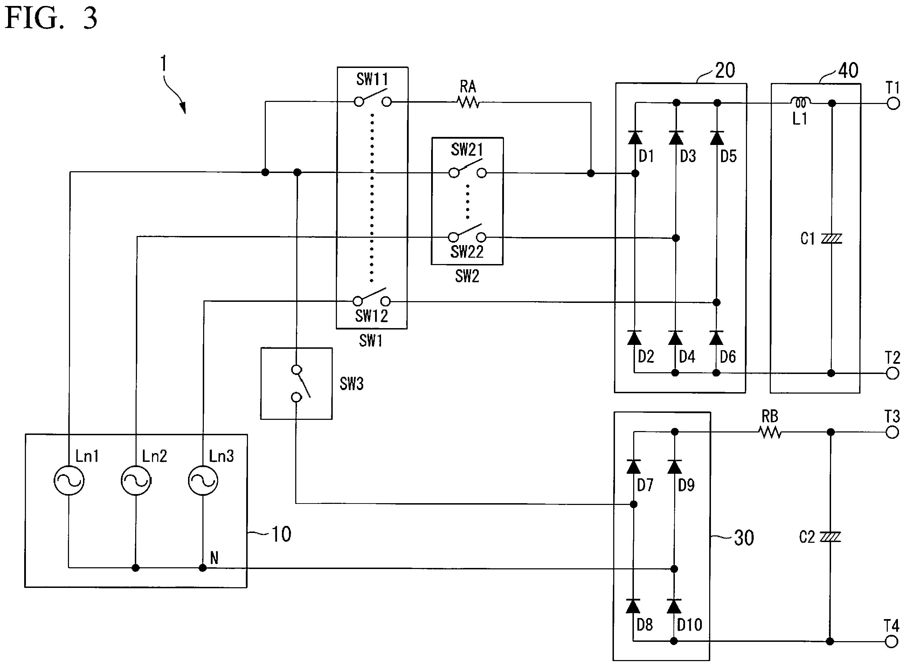

Here, as a comparison target, a rush current at the time of starting the operation of the power supply circuit 1 shown in FIG. 3 will be considered. A resistor RA shown in FIG. 3 is a resistor that decreases a rush current flowing though the capacitor C1 when the power supply circuit 1 starts to operate. In addition, a resistor RB is a resistor that decreases a rush current flowing through the capacitor C2 when the power supply circuit 1 starts to operate. In the power supply circuit 1 shown in FIG. 3, after capacitors C1 and C2 are charged with the switches SW11 and SW12 in the closed state, the switches SW21, SW22, and SW3 are caused to be in the closed state, whereby both ends of the resistor RA form a short circuit. As a result, a loss according to the resistor RA does not occur. However, in the power supply circuit 1 shown in FIG. 3, a resistance value of the resistor RB does not change even after the capacitors C1 and C2 are charged, and accordingly, a loss occurs in the resistor RB.

The power supply circuit 1 according to the first embodiment of the present invention is a power supply circuit that decreases a rush current and does not cause a loss like the loss occurring by the resistor RB in the power supply circuit 1 shown in FIG. 3 after the capacitors C1 and C2 are charged.

The power supply circuit 1 according to the first embodiment of the present invention has been described above.

A resistor is inserted into a current path in which a rush current flows when the power supply circuit 1 starts to operate, and both ends of the resistor inserted into the current path are caused to form a short circuit using a switch after capacitors C1 and C2 are charged in the output, whereby a loss due to the inserted resistor does not occur.

In such a case, a rush current at the time of starting the operation of the power supply circuit 1 can be decreased, and the occurrence of a loss due to the resistor inserted in the current path can be suppressed in a steady state after the start of an operation of the power supply circuit 1. By decreasing a rush current at the time of starting the operation of the power supply circuit 1, the size of the switches SW1, SW2, and SW3 can be decreased, whereby the area of a circuit board and the cost of the power supply circuit 1 can be decreased.

### <Second embodiment>

Hereinafter, the configuration of a power supply circuit according to a second embodiment of the present invention will be described.

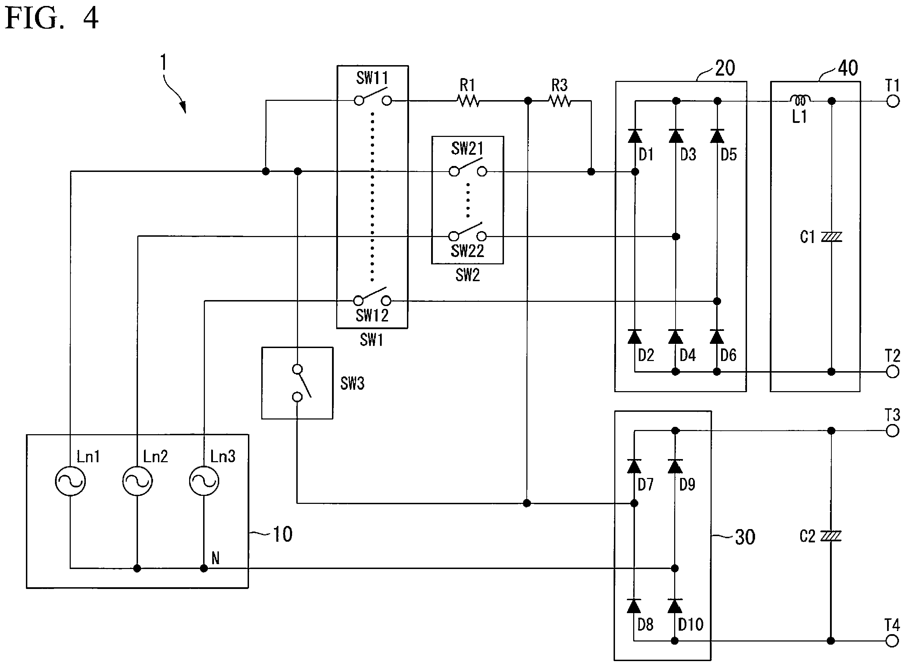

The power supply circuit 1 according to the second embodiment of the present invention, similar to the power supply circuit 1 according to the first embodiment of the present invention, is a circuit that decreases a maximum current of an overcurrent flowing through the inside of a power supply circuit 1 at the time of starting an operation and generates two DC voltages from a three-phase three-wire AC power supply during steady power supply. The power supply circuit 1, as shown in FIG. 4, includes a three-phase three-wire AC power supply 10, a first rectification circuit 20, a second rectification circuit 30, a smoothing circuit 40, a switch SW1, a switch SW2, a switch SW3, resistors R1 and R3 (one example of a rush current suppressing circuit), and capacitors C1 and C2. When an operation of the power supply circuit 1 starts, a current flows through a path in which the capacitor C1 is charged, a path in which the capacitor C2 is charged, or a path in which the capacitors C1 and C2 are charged.

Each of the resistors R1 and R3 is a resistor that decreases a rush current flowing through the inside of the power supply circuit 1 when the power supply circuit 1 starts to operate. Each of the resistors R1 and R3 includes a first terminal and a second terminal.

The switch SW1 includes switches SW11 and SW12. The switch SW2 includes switches SW21 and SW22. Each of the switches SW11, SW12, SW21, SW22, and SW3 is put in an off state (open state) or an on state (closed state) such that a maximum current of a rush current is decreased at the time of starting the operation of the power supply circuit 1, and no electric power loss occurs in the resistors R1 and R3 during steady power supply of the power supply circuit 1.

The wiring N is connected to an anode terminal of the diode D9 and a cathode terminal of the diode D10.

The wiring Ln1 is connected to the first terminal of the switch SW11, the first terminal of the switch SW21, and the first terminal of the switch SW3. The wiring Ln2 is connected to the first terminal of the switch SW22. The wiring Ln3 is connected to the first terminal of the switch SW12.

The second terminal of the switch SW11 is connected to the first terminal of the resistor R1. The second terminal of the switch SW12 is connected to an anode terminal of the diode D5 and a cathode terminal of the diode D6.

The second terminal of the switch SW21 is connected to the first terminal of the resistor R3, an anode terminal of the diode D1, and a cathode terminal of the diode D2. The second terminal of the switch SW22 is connected to an anode terminal of the diode D3, and a cathode terminal of the diode D4.

The second terminal of the switch SW3 is connected to the second terminal of the resistor R1, the second terminal of the resistor R3, an anode terminal of the diode D7, and a cathode terminal of the diode D8.

The cathode terminal of the diode D1 is connected to the cathode terminal of the diode D3, the cathode terminal of the diode D5, and the first terminal of the reactor L1.

The anode terminal of the diode D2 is connected to the anode terminal of the diode D4, the anode terminal of the diode D6, and the first terminal of the capacitor C1.

The cathode terminal of the diode D7 is connected to the cathode terminal of the diode D9 and the first terminal of the capacitor C2.

The anode terminal of the diode D8 is connected to the anode terminal of the diode D10 and the second terminal of the capacitor C2.

The second terminal of the capacitor C1 is connected to the second terminal of the reactor L1.

In addition, the second terminal of the capacitor C1 is a terminal T1 of the power supply circuit 1. The first terminal of the capacitor C1 is a terminal T2 of the power supply circuit 1. The first terminal of the capacitor C2 is a terminal T3 of the power supply circuit 1. The second terminal of the capacitor C2 is a terminal T4 of the power supply circuit 1. During steady power supply, the power supply circuit 1 outputs a DC voltage having the terminal T2 as reference electric potential from the terminal T1. In addition, during steady power supply, the power supply circuit 1 outputs a DC voltage having the terminal T4 as reference electric potential from the terminal T3.

Next, a process of the power supply circuit 1 according to the second embodiment of the present invention will be described.

A process flow of the power supply circuit 1 according to the second embodiment of the present invention is similar to the process flow of the power supply circuit 1 according to the first embodiment of the present invention shown in FIG. 2. Before the start of an operation of the power supply circuit 1, each of the switches SW11, SW12, SW21, SW22, and SW3 is in the off state (open state). In addition, before the start of an operation of the power supply circuit 1, it is assumed that no electric charge is accumulated in each of the capacitors C1 and C2.

At the time of the start of an operation of the power supply circuit 1, each of the switches SW11 and SW12 switches from the off state to the on state (Step S1).

When each of the switches SW11 and SW12 is in the on state, an inter-wire circuit formed from the phase Ln1 and the phase Ln3 and an inter-phase circuit formed from the phase Ln1 and the phase N are formed.

A current flowing at the time of starting an operation of the power supply circuit 1 is different between a case in which the electric potential at the wiring Ln1 is higher than the electric potential at the wiring Ln3 and a case in which the electric potential at the wiring Ln3 is higher than the electric potential at the wiring Ln1.

Hereinafter, a current flowing through the power supply circuit 1 will be described in each of the case in which the electric potential at the wiring Ln1 is higher than the electric potential at the wiring Ln3 and the case in which the electric potential at the wiring Ln3 is higher than the electric potential at the wiring Ln1.

### (Case in which electric potential at the wiring Ln1 is higher than the electric potential at the wiring Ln3)

When the power supply circuit 1 starts to operate, there are two charging paths including a seventh charging path and an eighth charging path.

The seventh charging path is a path that passes through the three-phase three-wire AC power supply 10 through the wiring Ln1, the switch SW11, the resistor R1, the resistor R3, the diode D1, the reactor L1, the capacitor C1, the diode D6, the switch SW12, and the wiring Ln3.

The eighth charging path is a path that passes through the three-phase three-wire AC power supply 10 through the wiring Ln1, the switch SW11, the resistor R1, the diode D7, the capacitor C2, the diode D10, and the wiring N. Here, each of the wiring N, the wiring Ln1, the switch SW11, the diode D1, the reactor L1, the capacitor C1, the diode D6, the switch SW12, the wiring Ln3, the three-phase three-wire AC power supply 10, the diode D7, the capacitor C2, and the diode D10 is assumed to be an ideal device.

In the seventh charging path, the impedance of each of the wiring Ln1, the switch SW11, the diode D1, the reactor L1, the capacitor C1, the diode D6, the switch SW12, the wiring Ln3, the three-phase three-wire AC power supply 10, the diode D7, the capacitor C2, and the diode D10 is 0 ohms. For this reason, as the impedance of the seventh charging path, the impedance of the resistor R1 + the resistor R3 is dominant.

In the eighth charging path, the impedance of each of the wiring Ln1, the switch SW11, the diode D7, the capacitor C2, the diode D10, the wiring N, and the three-phase three-wire AC power supply 10 is 0 ohms. For this reason, as the impedance of the eighth charging path, the impedance of the resistor R1 is dominant.

The resistor R1 is common to the seventh charging path and the eighth charging path. For this reason, when each of the switches SW11 and the SW12 is put in the on state, all the currents flowing through the wiring Ln1, the switch SW11, and the resistor R1 flow through the eighth charging path in which the impedance of the subsequent path is 0 ohms. Actually, the devices are not ideal devices, and finite impedance is present, and accordingly, a current corresponding to a ratio between the impedance of the seventh charging path and the impedance of the eighth charging path also flows through the seventh charging path. However, even in such a case, most of the current flowing through the wiring Ln1, the switch SW11, and the resistor R1 flows through the eighth charging path. As a result, when each of the switches SW11 and SW12 is put in the on state, a current flows through the eighth charging path, and the capacitor C2 is charged.

When the capacitor C2 is fully charged, a current does not flow in the sixth charging path that is a path passing through the capacitor C2. For this reason, when the capacitor C2 is fully charged, all the currents flowing through the wiring N, the wiring Ln1, the switch SW11, and the resistor R1 flow through the seventh charging path. When a current flows through the seventh charging path, the capacitor C1 is charged. Then, when the capacitor C1 is fully charged, a current does not flow in the power supply circuit 1.

### (Case in which electric potential at wiring Ln3 is higher than electric potential at wiring Ln1)

When the power supply circuit 1 starts to operate, there are two paths including a ninth charging path and a tenth charging path.

The ninth charging path is a path that passes through the three-phase three-wire AC power supply 10 through the wiring Ln3, the switch SW12, the diode D5, the reactor L1, the capacitor C1, the diode D2, the resistor R3, the resistor R1, the switch SW11, the wiring Ln1, and the wiring N.

The tenth charging path is a path that passes through the three-phase three-wire AC power supply 10 through the wiring Ln3, the switch SW12, the diode D5, the reactor L1, the capacitor C1, the diode D2, the resistor R3, the diode D7, the capacitor C2, the diode D10, and the wiring N.

Here, each of the wiring N, the wiring Ln3, the switch SW12, the diode D5, the reactor L1, the capacitor C1, the diode D2 the switch SW11, the wiring Ln1, the three-phase three-wire AC power supply 10, the diode D7, the capacitor C2, and the diode D10 is assumed to be an ideal device.

In the ninth charging path, the impedance of each of the wiring Ln3, the switch SW12, the diode D5, the reactor L1, the capacitor C1, the diode D2, the switch SW11, the wiring Ln1, and the three-phase three-wire AC power supply 10 is 0 ohms. For this reason, as the impedance of the ninth charging path, the impedance of the resistor R1 + the resistor R3 is dominant.

In the tenth charging path, the impedance of each of the wiring Ln3, the switch SW12, the diode D5, the reactor L1, the capacitor C1, the diode D2, the diode D7, the capacitor C2, the diode D10, and the three-phase three-wire AC power supply 10 is 0 ohms. For this reason, as the impedance of the tenth charging path, the impedance of the resistor R3 is dominant. For this reason, when each of the switches SW11 and the SW12 is put in the on state, all the currents flowing through the wiring Ln3, the switch SW12, the diode D5, the reactor L1, the capacitor C1, the diode D2, and the resistor R3 flow through the tenth path in which the impedance of the subsequent path is 0 ohms. Actually, the devices are not ideal devices, and finite impedance is present, and accordingly, a current corresponding to a ratio between the impedance of the ninth charging path and the impedance of the tenth charging path also flows through the ninth charging path. However, even in such a case, most of the current flowing through the wiring Ln1, the switch SW11, and the resistor R1 flows through the tenth charging path. As a result, when each of the switches SW11 and SW12 is put in the on state, a current flows through the tenth charging path, and the capacitor C1 and the capacitor C2 are charged.

In a case in which the capacitor C2 is fully charged earlier than the capacitor C1, the capacitor C1 is charged by the current flowing through the ninth charging path to be fully charged.

On the other hand, in a case in which the capacitor C1 is fully charged earlier than the capacitor C2, as shown below, the capacitor C2 is charged by a current flowing according to an electric potential relation between the electric potential at the wiring Ln1 and the electric potential at the wiring N and is fully charged. Specifically, in a case in which the electric potential at the wiring Ln1 is higher than the electric potential at the wiring N, an eleventh charging path passing through the three-phase three-wire AC power supply 10 through the wiring Ln1, the switch SW11, the resistor R1, the resistor R2, the diode D7, the capacitor C2, the diode D10, and the wiring N is formed. Then, the capacitor C2 is charged by a current flowing through the eleventh charging path. In addition, in a case in which the electric potential at the wiring N is higher than the electric potential at the wiring Ln1, a twelfth charging path passing through the three-phase three-wire AC power supply 10 through the wiring N, the diode D9, the capacitor C2, the diode D8, the resistor R1, the switch SW11, and the wiring Ln1 is formed. Then, the capacitor C2 is charged by a current flowing through the twelfth charging path.

Then, when both the capacitors C1 and C2 are fully charged, a current does not flow in the power supply circuit 1.

After the capacitors C1 and C2 are fully charged, each of the switches SW2 (SW21 and SW22) and SW3 is switched from the off state to the on state (Step S2). When each of the switches SW21, SW22, and SW3 is switched from the off state to the on state, the first terminal and the second terminal of the resistor R1 and the first terminal and the second terminal of the resistor R3 respectively form short circuits.

As a result, the power supply circuit 1 can realize a circuit configuration during steady power supply in which the resistors R1 and R3 are not present in a path for transferring a voltage for generating a DC voltage.

As above, the power supply circuit 1 according to the second embodiment of the present invention has been described.

A resistor is inserted into a current path in which a rush current flows when the power supply circuit 1 starts to operate, and both ends of the resistor inserted into the current path is caused to form a short circuit using a switch after capacitors C1 and C2 are charged in the output, whereby a loss due to the inserted resistor does not occur.

In such a case, a rush current at the time of starting the operation of the power supply circuit 1 can be decreased, and, the occurrence of a loss due to the resistor inserted into the current path can be suppressed in a steady state after the start of an operation of the power supply circuit 1. By decreasing a rush current at the time of starting the operation of the power supply circuit 1, the size of the switches SW1, SW2, and SW3 can be decreased, whereby the area of a circuit board and the cost of the power supply circuit 1 can be decreased.

### <Third embodiment>

Hereinafter, the configuration of a power supply circuit according to a third embodiment of the present invention will be described.

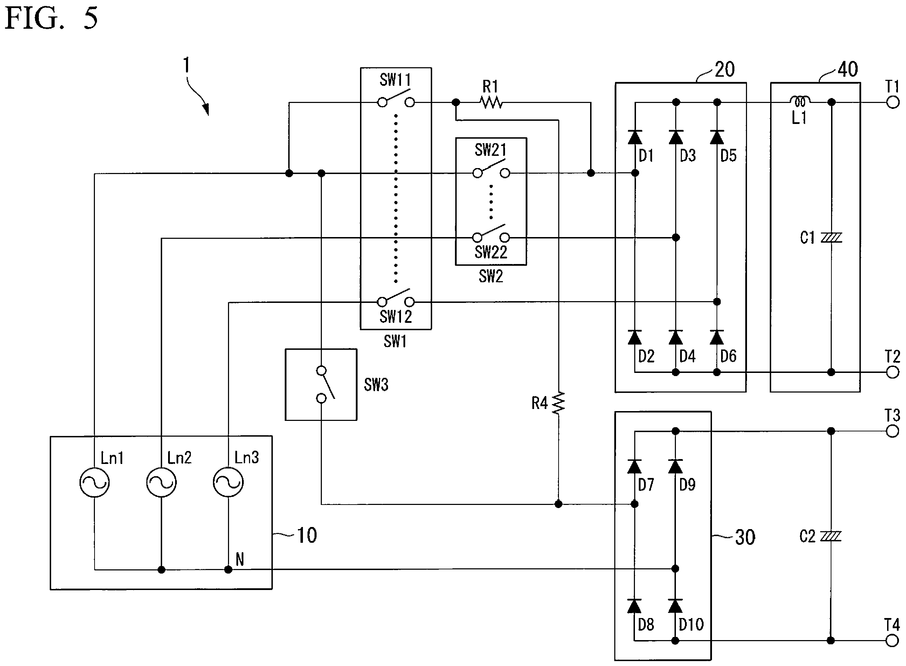

The power supply circuit 1 according to the third embodiment of the present invention, similar to the power supply circuit 1 according to the first embodiment of the present invention, is a circuit that decreases a maximum current of an overcurrent flowing through the inside of a power supply circuit 1 at the time of starting an operation and generates two DC voltages from a three-phase three-wire AC power supply during steady power supply. The power supply circuit 1, as shown in FIG. 5, includes a three-phase three-wire AC power supply 10, a first rectification circuit 20, a second rectification circuit 30, a smoothing circuit 40, a switch SW1, a switch SW2, a switch SW3, resistors R1 and R4 (one example of a rush current suppressing circuit), and capacitors C1 and C2. When an operation of the power supply circuit 1 starts, a current flows through a path in which the capacitor C1 is charged, a path in which the capacitor C3 is charged, or a path in which the capacitors C1 and C2 are charged.

Each of the resistors R1 and R4 is a resistor that decreases a rush current flowing through the inside of the power supply circuit 1 when the power supply circuit 1 starts to operate. Each of the resistors R1 and R4 includes a first terminal and a second terminal.

The switch SW1 includes switches SW11 and SW12. The switch SW2 includes switches SW21 and SW22. Each of the switches SW11, SW12, SW21, SW22, and SW3 is put in an off state (open state) or an on state (closed state) such that a maximum current of a rush current is decreased at the time of starting the operation of the power supply circuit 1, and no electric power loss occurs in the resistors R1 and R4 during steady power supply of the power supply circuit 1.

The wiring N is connected to an anode terminal of the diode D9 and a cathode terminal of the diode D10.

The wiring Ln1 is connected to the first terminal of the switch SW11, the first terminal of the switch SW21, and the first terminal of the switch SW3. The wiring Ln2 is connected to the first terminal of the switch SW22. The wiring Ln3 is connected to the first terminal of the switch SW12.

The second terminal of the switch SW11 is connected to the first terminal of the resistor R1 and the first terminal of the resistor R4. The second terminal of the switch SW12 is connected to an anode terminal of the diode D5 and a cathode terminal of the diode D6.

The second terminal of the switch SW21 is connected to the second terminal of the resistor R1, an anode terminal of the diode D1, and a cathode terminal of the diode D2. The second terminal of the switch SW22 is connected to an anode terminal of the diode D3, and a cathode terminal of the diode D4.

The second terminal of the switch SW3 is connected to the second terminal of the resistor R4, an anode terminal of the diode D7, and a cathode terminal of the diode D8.

The cathode terminal of the diode D1 is connected to the cathode terminal of the diode D3, the cathode terminal of the diode D5, and the first terminal of the reactor L1.

The anode terminal of the diode D2 is connected to the anode terminal of the diode D4, the anode terminal of the diode D6, and the first terminal of the capacitor C1.

The cathode terminal of the diode D7 is connected to the cathode terminal of the diode D9 and the first terminal of the capacitor C2.

The anode terminal of the diode D8 is connected to the anode terminal of the diode D10 and the second terminal of the capacitor C2.

The second terminal of the capacitor C1 is connected to the second terminal of the reactor L1.

In addition, the second terminal of the capacitor C1 is a terminal T1 of the power supply circuit 1. The first terminal of the capacitor C1 is a terminal T2 of the power supply circuit 1. The first terminal of the capacitor C2 is a terminal T3 of the power supply circuit
1. The second terminal of the capacitor C2 is a terminal T4 of the power supply circuit 1. During steady power supply, the power supply circuit 1 outputs a DC voltage having the terminal T2 as reference electric potential from the terminal T1. In addition, during steady power supply, the power supply circuit 1 outputs a DC voltage having the terminal T4 as reference electric potential from the terminal T3.

Next, a process of the power supply circuit 1 according to the third embodiment of the present invention will be described.

A process flow of the power supply circuit 1 according to the third embodiment of the present invention is similar to the process flow of the power supply circuit 1 according to the first embodiment of the present invention shown in FIG. 2. Before the start of an operation of the power supply circuit 1, each of the switches SW11, SW12, SW21, SW22, and SW3 is in the off state (open state). In addition, before the start of an operation of the power supply circuit 1, it is assumed that no electric charge is accumulated in each of the capacitors C1 and C2.

At the time of the start of an operation of the power supply circuit 1, each of the switches SW11 and SW12 switches from the off state to the on state (Step S1).

When each of the switches SW11 and SW12 is in the on state, an inter-wire circuit formed from the phase Ln1 and the phase Ln3 and an inter-phase circuit formed from the phase Ln1 and the phase N are formed.

A current flowing at the time of starting an operation of the power supply circuit 1 is different between a case in which the electric potential at the wiring Ln1 is higher than the electric potential at the wiring Ln3 and a case in which the electric potential at the wiring Ln3 is higher than the electric potential at the wiring Ln1.

Hereinafter, a current flowing through the power supply circuit 1 will be described in each of the case in which the electric potential at the wiring Ln1 is higher than the electric potential at the wiring Ln3 and the case in which the electric potential at the wiring Ln3 is higher than the electric potential at the wiring Ln1.

### (Case in which electric potential at the wiring Ln1 is higher than the electric potential at the wiring Ln3)

As paths flowing from the wiring N passing through the wiring Ln1 and returning to the wiring N, there are two paths including a thirteenth charging path and a fourteenth charging path.

The thirteenth charging path is a path that passes through the three-phase three-wire AC power supply 10 through the wiring Ln1, the switch SW11, the resistor R1, the diode D1, the reactor L1, the capacitor C1, the diode D6, the switch SW12, and the wiring Ln3.

The fourteenth charging path is a path that passes through the three-phase three-wire AC power supply 10 through the wiring Ln1, the switch SW11, the resistor R4, the diode D7, the capacitor C2, the diode D10, and the wiring N.

Here, each of the wiring N, the wiring Ln1, the switch SW11, the diode D1, the reactor L1, the capacitor C1, the diode D6, the switch SW12, the wiring Ln3, the three-phase three-wire AC power supply 10, the diode D7, the capacitor C2, and the diode D10 is assumed to be an ideal device.

In the thirteenth charging path, the impedance of each of the wiring Ln1, the switch SW11, the diode D1, the reactor L1, the capacitor C1, the diode D6, the switch SW12, the wiring Ln3, and the three-phase three-wire AC power supply 10 is 0 ohms. For this reason, as the impedance of the thirteenth charging path, the impedance of the resistor R1 is dominant.

In the fourteenth charging path, the impedance of each of the wiring Ln1, the switch SW11, the diode D7, the capacitor C2, the diode D10, the wiring N, and the three-phase three-wire AC power supply 10 is 0 ohms. For this reason, as the impedance of the fourteenth charging path, the impedance of the resistor R4 is dominant.

For this reason, when each of the switch SW11 and SW12 is put in the on state, currents flowing through the thirteenth charging path and the fourteenth charging path are currents corresponding to a ratio between the resistor R1 that is the impedance of the thirteenth charging path and the resistor R4 that is the impedance of the fourteenth charging path.

The capacitors C1 and C2 are charged by the currents flowing through the thirteenth charging path and the fourteenth charging path in correspondence with the ratio between the resistor R1 and the resistor R4. Then, when the capacitors C1 and C2 are fully charged, a current does not flow in the power supply circuit 1.

### (Case in which electric potential at wiring Ln3 is higher than electric potential at wiring Ln1)

When the power supply circuit 1 starts to operate, there are two paths including a fifteenth charging path and a sixteenth charging path.

The fifteenth charging path is a path that passes through the three-phase three-wire AC power supply 10 through the wiring Ln3, the switch SW12, the diode D5, the reactor L1, the capacitor C1, the diode D2, the resistor R1, the switch SW11, and the wiring Ln1.

The sixteenth charging path is a path that passes through the three-phase three-wire AC power supply 10 through the wiring Ln3, the switch SW12, the diode D5, the reactor L1, the capacitor C1, the diode D2, the resistor R1, the resistor R4, the diode D7, the capacitor C2, the diode D10, and the wiring N.

Here, each of the wiring N, the wiring Ln3, the switch SW12, the diode D5, the reactor L1, the capacitor C1, the diode D2 the switch SW11, the wiring Ln1, the three-phase three-wire AC power supply 10, the diode D7, the capacitor C2, and the diode D10 is assumed to be an ideal device.

In the fifteenth charging path, the impedance of each of the wiring Ln3, the switch SW12, the diode D5, the reactor L1, the capacitor C1, the diode D2, the switch SW11, the wiring Ln1, and the three-phase three-wire AC power supply 10 is 0 ohms. For this reason, as the impedance of the fifteenth charging path, the impedance of the resistor R1 is dominant.

In the sixteenth charging path, the impedance of each of the wiring Ln3, the switch SW12, the diode D5, the reactor L1, the capacitor C1, the diode D2, the diode D7, the capacitor C2, the diode D10, the wiring N, and the three-phase three-wire AC power supply 10 is 0 ohms. For this reason, in the sixteenth charging path, the impedance of the resistor R1 + the resistor R4 is dominant.

The resistor R1 is common to the fifteenth charging path and the sixteenth charging path. For this reason, when each of the switches SW11 and the SW12 is put in the on state, all the currents flowing through the wiring Ln3, the switch SW12, the diode D5, the reactor L1, the capacitor C1, the diode D2, and the resistor R1 flow through the fifteenth charging path in which the impedance of the subsequent path is 0 ohms. Actually, the devices are not ideal devices, and finite impedance is present, and accordingly, a current corresponding to a ratio between the impedance of the fifteenth charging path and the impedance of the sixteenth charging path also flows through the sixteenth charging path. However, even in such a case, most of the current flowing through the wiring Ln3, the switch SW12, the diode D5, the reactor L1, the capacitor C1, the diode D2, and the resistor R1 flows through the fifteenth charging path.

In a case in which the capacitor C2 is fully charged earlier than the capacitor C1, the capacitor C1 is charged by the current flowing through the fifteenth charging path to be fully charged.

On the other hand, in a case in which the capacitor C1 is fully charged earlier than the capacitor C2, as shown below, the capacitor C2 is charged by a current flowing according to an electric potential relation between the electric potential at the wiring Ln1 and the electric potential at the wiring N and is fully charged. Specifically, in a case in which the electric potential at the wiring Ln1 is higher than the electric potential at the wiring N, a seventeenth charging path passing through the three-phase three-wire AC power supply 10 through the wiring Ln1, the switch SW11, the resistor R4, the diode D7, the capacitor C2, the diode D10, and the wiring N is formed. Then, the capacitor C2 is charged by a current flowing through the seventeenth charging path. In addition, in a case in which the electric potential at the wiring N is higher than the electric potential at the wiring Ln1, an eighteenth charging path passing through the three-phase three-wire AC power supply 10 through the wiring N, the diode D9, the capacitor C2, the diode D8, the resistor R4, the switch SW11, and the wiring Ln1 is formed. Then, the capacitor C2 is charged by a current flowing through the eighteenth charging path.

Then, when both the capacitors C1 and C2 are fully charged, a current does not flow in the power supply circuit 1.

After the capacitors C1 and C2 are charged, each of the switches SW2 (SW21 and SW22) and SW3 is switched from the off state to the on state (Step S2). When each of the switches SW21, SW22, and SW3 is switched from the off state to the on state, the first terminal and the second terminal of the resistor R1 form a short circuit. In addition, when each of the switches SW21, SW22, and SW3 is switched from the off state to the on state, the first terminal and the second terminal of the resistor R4 form a short circuit.

As a result, the power supply circuit 1 can realize a circuit configuration during steady power supply in which the resistors R1 and R4 are not present in a path for transferring a voltage for generating a DC voltage.

In each of the embodiments of the present invention, each of the paths connecting an input side of the rectification circuit 20 and an input side of the rectification circuit 30 constitutes an inter-wire inter-phase connection line. The inter-wire inter-phase connection line is determined by the relationship between the electric potential of the wires, by the state of the switches, the state of charging of the capacitors, and by the like.

For example, in the first embodiment of the present invention, in the case in which the electric potential at wiring Ln1 is higher than the electric potential at wiring Ln3, when the power supply circuit 1 starts to operate, a path via the wiring Ln1, the switch SW11, and the resistor R1 is an example of an inter-wire inter-phase connection line. Also, when the power supply circuit 1 starts to operate, a path via the resistor R2 is another example of an inter-wire inter-phase connection line.

In addition, for example, in the first embodiment of the present invention, in the case in which the electric potential at wiring Ln1 is higher than the electric potential at wiring Ln3, when the capacitor C2 is fully charged earlier than the capacitor C1, the path via the wiring Ln1, the switch SW11, and the resistor R1 is another example of an inter-wire inter-phase connection line.

In addition, for example, in the first embodiment of the present invention, in the case in which the electric potential at wiring Ln1 is higher than the electric potential at wiring Ln3, when the capacitor C1 is fully charged earlier than the capacitor C2, the path via the wiring Ln1, the switch SW11, and the resistor R1 is another example of an inter-wire inter-phase connection line. Also, when the capacitor C1 is fully charged earlier than the capacitor C2, the path via the resistor R2 is another example of another inter-wire inter-phase connection line.

In addition, each switch according to an embodiment of the present invention may be switched between the on state and the off state by a control device (not shown in the drawing) included in the power supply circuit 1.

Furthermore, in a process according to an embodiment of the present invention, the order of the process may be changed in a range in which an appropriate process is performed.

Each storage unit may be included in any place in a range in which transmission/reception of information is appropriately performed. In addition, each storage unit may be a plurality of storage units present in a range in which transmission/reception of information is appropriately performed, and the plurality of storage units may store data in a distributed manner.

While the embodiments of the present invention have been described, each of the power supply circuits 1 described above may include a computer system inside. The procedure of each process of the device described above is stored on a computer-readable recording medium in the form of a program, and, by reading and executing the program using a computer, the process described above is executed. Here, the computer-readable recording medium is a magnetic disk, a magneto-optical disk, a CD-ROM, a DVD-ROM, a semiconductor memory, or the like. In addition, this computer program may be delivered to a computer through a communication line, and the computer that has received the computer program may execute the program.

The program may be used for realizing a part of the function described above. Furthermore, the program may be a file that can realize the function described above in combination with a program that already has been recorded in a computer system, a so-called differential file (differential program).

While preferred embodiments of the invention have been described and shown above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A three-phase four-wire power supply circuit (1), **characterised in that** it comprises:
a first converter circuit that includes a first rectification circuit (20) that is configured to rectify inter-wire electric power of a three-phase three-wire AC power supply (10), the three-phase three-wire AC power supply including three phases (Ln1, Ln2, Ln3) and a rush current suppressing circuit (R1, R2; R1, R3; R1, R4) that is disposed in one phase among the three phases, and the first converter circuit being configured to convert the inter-wire electric power into DC power;
a second converter circuit that includes a second rectification circuit (30) that is configured to rectify inter-phase electric power of the three-phase three-wire AC power supply, the second converter circuit being configured to convert the inter-phase electric power into DC power; and
an inter-wire inter-phase connection line that is configured to connect an input side of the first rectification circuit and an input side of the second rectification circuit.

2. The three-phase four-wire power supply circuit according to claim 1,
wherein the inter-wire inter-phase connection line includes a resistor.

3. A control method using a three-phase four-wire power supply circuit, **characterised in that** said three-phase four-wire power supply circuit (1) comprises: a first converter circuit that includes a first rectification circuit (20) that is configured to rectify inter-wire electric power of a three-phase three-wire AC power supply (10), the three-phase three-wire AC power supply including three phases (Ln1, Ln2, Ln3) and a rush current suppressing circuit (R1, R2; R1, R3; R1, R4) that is disposed in one phase among the three phases, and the first converter circuit being configured to convert the inter-wire electric power into DC power; a second converter circuit that includes a second rectification circuit (30) that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit, the control method being **characterised in that** it comprises:
switching a first switch (SW1) from an open state to a closed state, the first switch configuring a current loop path to the inter-wire inter-phase connection line; and
switching a second switch (SW2) from the open state to the closed state, the second switch forming a short circuit of a resistor disposed between the input side of the first rectification circuit and the input side of the second rectification circuit.

4. A computer program for a three-phase four-wire power supply circuit, said three-phase four-wire power supply circuit being **characterised in that** it comprises: a first converter circuit that includes a first rectification circuit (20) that is configured to rectify inter-wire electric power of a three-phase three-wire AC power supply (10), the three-phase three-wire AC power supply including three phases (Ln1, Ln2, Ln3) and a rush current suppressing circuit (R1, R2; R1, R3; R1, R4) that is disposed in one phase among the three phases, and the first converter circuit being configured to convert the inter-wire electric power into DC power; a second converter circuit that includes a second rectification circuit (30) that is configured to rectify inter-phase electric power of the three-phase three-wire AC power supply, the second converter circuit being configured to convert the inter-phase electric power into DC power; and an inter-wire inter-phase connection line that is configured to connect an input side of the first rectification circuit and an input side of the second rectification circuit,
the computer program being **characterised in that** it includes instructions for causing a computer to execute the steps of a control method according to claim 3.
